# EUROPEAN PATENT APPLICATION

(11) **EP 4 641 954 A1**
(43) Date of publication of application: **29.10.2025**
(21) Application number: 24738454.8
(22) Date of filing: 02.01.2024
(51) Int. Cl.: H04B 17/382

(54) **METHOD FOR DETERMINING TRANSMISSION PARAMETERS, METHOD FOR TRANSMITTING DATA, AND ELECTRONIC DEVICE**

(30) Priority: 06.01.2023 CN 202310019676
(71) Applicant: ZTE CORPORATION, Shenzhen, Guangdong 518057 (CN)
(72) Inventor: WEI, Hao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/070168
(87) International publication number: WO 2024/146521

(57) **Abstract**

Disclosed in the present application are a method for determining transmission parameters, a method for transmitting data, and an electronic device. The method comprises: receiving a first signal measurement value of a first beam pair that is fed back by a terminal, wherein the first beam pair comprises a first beam, which is sent by a base station, and a first receiving beam, which is received by the terminal, the first receiving beam being a receiving beam corresponding to the first beam; sending a second beam to the terminal; receiving a third signal measurement value of a third beam pair that is fed back by the terminal, wherein the third beam pair comprises a second beam, which is sent by the base station, the first receiving beam; determining transmission parameters of the base station according to the first signal measurement value and the third signal measurement value.

## Description

### CROSS-REFERENCE TO RELATED APPLICATIONS

The present application claims priority to Chinese patent application No. 202310019676.4 filed on January 6, 2023 to the China Patent Office, and entitled "METHOD FOR DETERMINING TRANSMISSION PARAMETERS, METHOD FOR TRANSMITTING DATA, AND ELECTRONIC DEVICE", the entire content of which is incorporated herein by reference.

### TECHNICAL FIELD

The present application belongs to the technical field of communications, and specifically relates to a method for determining transmission parameters, a method for transmitting data, and an electronic device.

### BACKGROUND

A base station makes a decision to switch to a beam pair with a better quality according to a reference signal receiving power (RSRP) measurement value of a beam pair reported by a terminal during a beam scanning process. The base station sends an indicator of beam switching to the terminal. The terminal, after receiving the indicator of the base station, performs switching of a receiving beam.

It takes some time for the terminal to decode an instruction signal for beam switching and to switch beams, during which there is only RSRP information for a new beam pair between the base station and the terminal, and no channel information measurement is performed. Therefore, the base station usually uses a lower modulation and coding scheme (MCS) to configure transmission parameters when sending new beam data, thus performing conservative transmission, which may cause a phenomenon of a steep drop in data transmission traffic over a period of time, affecting performance of a communication system.

### SUMMARY

An objective of embodiments of the present application is to provide a method for determining transmission parameters, an electronic device, and a storage medium, which can enable a base station and a terminal to maintain stable data transmission traffic and performance of a system during a beam switching process.

In a first aspect, an embodiment of the present application provides a method for determining transmission parameters, including: receiving a first signal measurement value of a first beam pair that is fed back by a terminal, wherein the first beam pair includes a first beam sent by a base station, and a first receiving beam received by the terminal, and the first receiving beam is a receiving beam corresponding to the first beam; sending a second beam to the terminal; receiving a third signal measurement value of a third beam pair that is fed back by the terminal, wherein the third beam pair includes a second beam sent by the base station, and the first receiving beam; and determining transmission parameters of the base station according to the first signal measurement value and the third signal measurement value.

In a second aspect, an embodiment of the present application provides a method for transmitting data, including: feeding a first signal measurement value of a first beam pair back to a base station, wherein the first beam pair includes a first beam sent by the base station, and a first receiving beam received by a terminal, and the first receiving beam is a receiving beam corresponding to the first beam; receiving a second beam sent by the base station; and feeding a third signal measurement value of a third beam pair back to the base station, wherein the third beam pair includes the second beam sent by the base station, and the first receiving beam.

In a third aspect, an embodiment of the present application provides an apparatus for determining transmission parameters, including: a first receiving module, configured to receive a first signal measurement value of a first beam pair that is fed back by a terminal, wherein the first beam pair includes a first beam sent by a base station, and a first receiving beam received by the terminal, and the first receiving beam is a receiving beam corresponding to the first beam; a second sending module, configured to send a second beam to the terminal; a second receiving module, configured to receive a third signal measurement value of a third beam pair that is fed back by the terminal, wherein the third beam pair includes a second beam sent by the base station, and the first receiving beam; and a determining module, configured to determine transmission parameters of the base station according to the first signal measurement value and the third signal measurement value.

In a fourth aspect, an embodiment of the present application provides an apparatus for transmitting data, including: a first feedback module, configured to feed a first signal measurement value of a first beam pair back to a base station, wherein the first beam pair includes a first beam sent by the base station, and a first receiving beam received by a terminal, and the first receiving beam is a receiving beam corresponding to the first beam; a third receiving module, configured to receive a second beam sent by the base station; and a second feedback module, configured to feed a third signal measurement value of a third beam pair back to the base station, wherein the third beam pair includes the second beam sent by the base station, and the first receiving beam.

In a fifth aspect, an embodiment of the present application provides an electronic device. The electronic device includes a processor and a memory. The memory stores a program or an instruction runnable on the processor. The program or the instruction, when executed by the processor, implements the steps of the method for determining the transmission parameters or the method for transmitting the data as described in the first aspect or the second aspect.

In a sixth aspect, an embodiment of the present application provides a readable storage medium, having a program or instruction stored thereon. The program or the instruction, when executed by a processor, implements the steps of the method for determining the transmission parameters or the method for transmitting the data as described in the first aspect or the second aspect.

### BRIEF DESCRIPTION OF DRAWING(S)

In order to explain technical solutions in embodiments of the present application or the prior art more clearly, accompanying drawings that need to be used in descriptions of the embodiments or the prior art will be briefly introduced below. Apparently, the accompanying drawings in the following descriptions are only some embodiments recorded in the present application, and those of ordinary skill in the art can further obtain other accompanying drawings from these accompanying drawings without creative work.
FIG. 1 is a schematic flowchart of a method for determining transmission parameters provided by an embodiment of the present application.
FIG. 2 is another schematic flowchart of a method for determining transmission parameters provided by an embodiment of the present application.
FIG. 3 is a schematic diagram of a beam switching process on a base station side provided by an embodiment of the present application.
FIG. 4 is a schematic flowchart of a method for transmitting data provided by an embodiment of the present application.
FIG. 5 is a schematic structural diagram of an apparatus for determining transmission parameters provided by an embodiment of the present application.
FIG. 6 is a schematic structural diagram of an apparatus for transmitting data provided by an embodiment of the present application.
FIG. 7 is a schematic diagram of a hardware structure of an electronic device provided by an embodiment of the present application.

### DETAILED DESCRIPTION

In order to enable those of skill in the art to better understand technical solutions in the present application, the following will clearly and completely describe the technical solutions in embodiments of the present application with reference to accompanying drawings in the embodiments of the present application. Apparently, the described embodiments are only part of the embodiments of the present application, rather than all the embodiments. Based on the embodiments in the present application, all other embodiments obtained by those of ordinary skill in the art without making creative work should belong to the scope of protection of the present application.

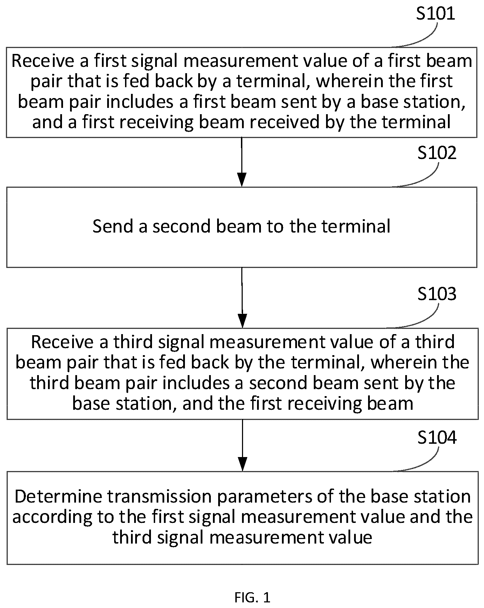

FIG. 1 shows a schematic flowchart of a method for determining transmission parameters provided by an embodiment of the present application. The method may be performed by a network device. The network device may be, for example, a base station. In other words, the method may be performed by software or hardware installed on the network device. As shown in FIG. 1, the method may include the following steps:
S101: a first signal measurement value of a first beam pair that is fed back by a terminal is received.

The first beam pair includes a first beam sent by the base station, and a first receiving beam received by the terminal. The first receiving beam is a receiving beam corresponding to the first beam. In wireless communication, the base station sends a beam to the terminal. The terminal receives data according to the sending beam, and then performs, based on the sending beam and the receiving beam corresponding to the sending beam, a relevant signal measurement, such as reference signal receiving power (RSRP), and a signal to interference plus noise ratio (SINR). At the same time, periodic beam scanning is performed between the base station and the terminal. The terminal feeds relevant signal measurement values of different beam pairs back to the base station.

The base station makes a decision to switch to a beam pair with a better quality according to a relevant signal measurement value of a beam pair reported by the terminal during a beam scanning process. For example, during a periodic beam scanning process between the base station and the terminal, a base station side decides whether to perform beam switching according to an RSRP value of a new beam pair and an RSRP value of an original beam pair, and sends a beam switching indicator to the terminal to instruct the terminal to perform switching of the receiving beam.

S102: a second beam is sent to the terminal.

In this step, the base station side adopts a new sending beam for data transmission.

S103: a third signal measurement value of a third beam pair that is fed back by the terminal is received.

The third beam pair includes a second beam sent by the base station, and the first receiving beam. It takes some time for the terminal to decode an instruction signal for beam switching and to switch beams. After the base station sends the new beam, at this time, the terminal still adopts the original receiving beam. For example, in this step, an RSRP value (the third signal measurement value) of this beam pair (the third beam pair) of the new sending beam and the receiving beam corresponding to the original sending beam that is reported by the terminal is received.

S104: transmission parameters of the base station are determined according to the first signal measurement value and the third signal measurement value.

For example, in this step, the transmission parameters of the base station, such as a modulation mode used for a transmission channel, an encoding rate, the number of spatial streams, and whether 40 MHz is bound, are determined according to an RSRP value of the first beam pair (an original sending beam/an original receiving beam) and an RSRP value of the third beam pair (a new sending beam/an original receiving beam). Specifically, the transmission parameters may be determined by configuring a modulation and coding scheme (MCS). Different MCSs correspond to combinations of different parameter values of various transmission parameters. Each MCS corresponds to an index value in an MCS table. Broadly speaking, the MCS defines the effective number of bits that one resource element (RE) can carry. In general, there are 32 MCSs from number 0 to number 31, wherein numbers 29 to 31 are reserved. The higher the MCS index, the higher the effective number of bits that can be carried. As for modulation modes in the MCS, such as 5G-new-radio (NR)-supported quadrature phase shift keying (QPSK), 16-bit quadrature amplitude modulation (QAM), 64QAM, and 256QAM modulation, each RE may transmit 2 bits using the QPSK, may transmit 4 bits using the 16QAM, may transmit 6 bits using the 64QAM, and may transmit 8 bits using the 256QAM. In this way, instead of directly configuring the transmission parameters with a lower MCS, e.g., configuring the effective number of bits that can be carried by one RE to 2 or 4 bits, the base station adjusts the configuration of the transmission parameters according to an actual situation of a network, i.e., according to the first signal measurement value and the third signal measurement value during the beam switching process, thus avoiding a phenomenon of a steep drop in data transmission traffic over a period of time, and improving performance of a communication system.

According to a method for transmitting data provided by an embodiment of the present application, a first signal measurement value of a first beam pair that is fed back by a terminal is received, wherein the first beam pair includes a first beam sent by a base station, and a first receiving beam received by the terminal, and the first receiving beam is a receiving beam corresponding to the first beam. A second beam is sent to the terminal. A third signal measurement value of a third beam pair that is fed back by the terminal is received, wherein the third beam pair includes a second beam sent by the base station, and the first receiving beam. Transmission parameters of the base station are determined according to the first signal measurement value and the third signal measurement value. Thus the base station and the terminal can maintain stable data transmission traffic and performance of a system during a beam switching process.

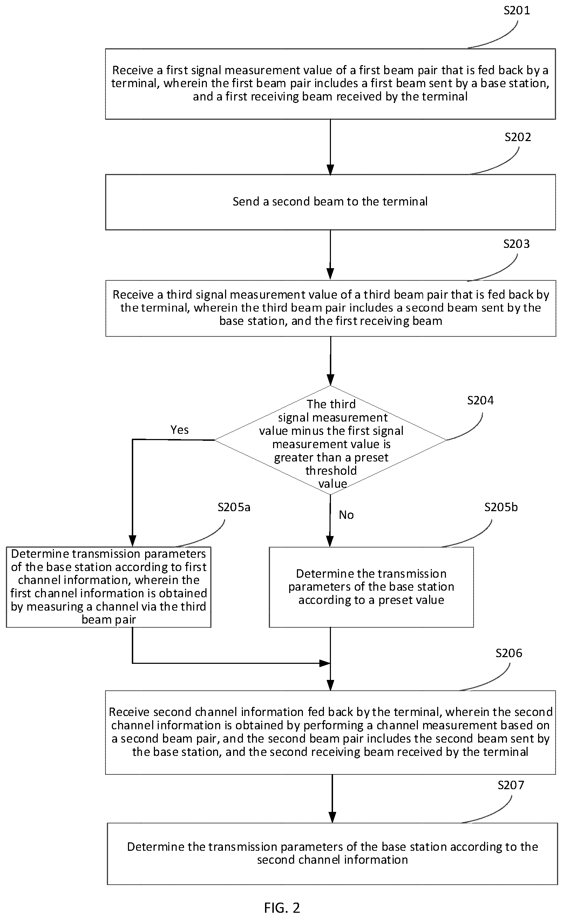

FIG. 2 shows another schematic flowchart of a method for determining transmission parameters provided by an embodiment of the present application. The method may be performed by a network device. The network device may be, for example, a base station. In other words, the method may be performed by software or hardware installed on the network device. As shown in FIG. 2, the method may include the following steps:
S201: a first signal measurement value of a first beam pair that is fed back by a terminal is received.

The first beam pair includes a first beam sent by the base station, and a first receiving beam received by the terminal. The first receiving beam is a receiving beam corresponding to the first beam. For example, in this step, an RSRP value, received by the base station, of a beam pair of an original sending beam/an original receiving beam that is fed back by the terminal is P1.

S202: a second beam is sent to the terminal.

S203: a third signal measurement value of a third beam pair that is fed back by the terminal is received.

The third beam pair includes a second beam sent by the base station, and the first receiving beam. As described in aforementioned step S103, in this step, after the base station sends a new beam, the terminal still adopts the original receiving beam at this time. For example, an RSRP value, received by the base station, of the beam pair (a third beam pair) of a new sending beam and the original receiving beam that is reported by the terminal is P3.

S204: a magnitude of a difference between the third signal measurement value and the first signal measurement value and a magnitude of a preset threshold value are judged.

S205a: the transmission parameters of the base station are determined according to first channel information in a case where the difference between the third signal measurement value and the first signal measurement value is greater than the preset threshold value, wherein the first channel information is obtained by measuring a channel via the third beam pair.

In this step, in a case that a channel quality of the beam pair (the third beam pair) of the new sending beam and the original receiving beam is judged to be better than a channel quality of the beam pair (the first beam pair) of the original sending beam and the original receiving beam, before a channel measurement of the new beam pair is performed, parameter setting for data transmission of the base station is obtained based on the first channel information (e.g., C1) of the beam pair (the third beam pair) of the new sending beam and the original receiving beam, wherein the first channel information includes a channel quality indicator (CQI), a rank indicator (RI), a precoding matrix indicator (PMI), etc. The transmission parameters of the base station are determined according to the first channel information. For example, a modulation mode, a data block size or a data encoding rate are selected according to information such as the CQI, the RI, and the PMI.

S205b: the transmission parameters of the base station are determined according to a preset value in a case where the difference between the third signal measurement value and the first signal measurement value is not greater than the preset threshold value.

In a case that the channel quality of the beam pair (the third beam pair) of the new sending beam and the original receiving beam is judged to be not better than the channel quality of the beam pair (the first beam pair) of the original sending beam and the original receiving beam, then before the channel measurement of the new beam pair is performed, the transmission parameters of the base station are configured adopting lower MCS transmission parameters, i.e., conservative scheduling. For example, a difference of P3 minus P1 is less than or equal to a preset threshold value T, then the transmission parameters of the base station are configured according to a preset value. Here the preset value may represent the effective number of bits that can be carried by one RE, and the preset value is lower, e.g., 2 bits or 4 bits, or it may be represented as a lower index value of the MCS, e.g., 0 to 10, as described previously. The aforementioned preset threshold value T is used to compare magnitudes of signal measurement values, and is generally set smaller, mainly in consideration of the fact that when P3 is slightly greater than P1, or P3 is less than P1, meaning that the original receiving beam on a terminal side may be blocked, it is appropriate to adopt a configuration of conservative scheduling at this time.

S206: second channel information fed back by the terminal is received.

The second channel information is obtained by performing a channel measurement based on a second beam pair, and the second beam pair includes the second beam sent by the base station, and the second receiving beam received by the terminal.

In this step, the base station and the terminal adopt a new beam pair (the second beam pair) for the channel measurement, and the terminal feeds back new channel information (the second channel information) such as C2 (including CQI/RI/PMI, etc.).

S207: the transmission parameters of the base station are determined according to the second channel information.

For the parameters of the data transmission of the base station in this step, the relevant transmission parameters are determined based on the second channel information C2.

In one implementation, after step S203 above, the method further includes: sending a beam switching indicator to the terminal, wherein the beam switching indicator is used to instruct the terminal to perform a channel measurement based on a second receiving beam corresponding to the second beam.

In one implementation, above step S202 includes: receiving a second signal measurement value corresponding to a second reference signal associated with the second beam fed back by the terminal; and sending the second beam to the terminal in a case where the second signal measurement value is greater than the first signal measurement value.

Specifically, during the beam scanning process, the terminal feeds back to the base station the RSRP value P1 of the beam pair (the first beam pair) of the sending beam/original receiving beam, and an RSRP value P2 of the new beam pair (the second beam pair). When P2 is greater than P1, the base station makes a decision to perform beam switching from sending the first beam to sending the second beam.

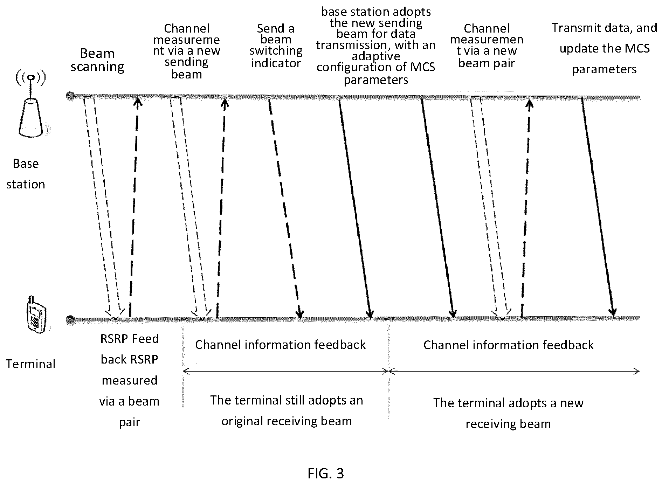

FIG. 3 shows a schematic diagram of a beam switching process between a base station and a terminal provided by an embodiment of the present application. As can be seen from FIG. 3, the base station adopts a new sending beam for a channel measurement before sending a beam switching indicator to the terminal. The terminal still feeds back a channel quality and channel information for an original receiving beam. Parameter setting of data transmission of the base station is adaptively configured according to a channel measurement situation until after the measurement and feedback of channel information of the new beam pair is performed between the base station and the terminal, the base station sends data and then performs a configuration of transmission parameters suitable for the new beam pair, so as to enable the base station and the terminal to maintain stable data transmission traffic and the performance of a system during the beam switching process. In addition, in the embodiments of the present application, the channel measurement is performed before the base station sends the beam switching indicator without changing an existing standard protocol, the terminal side does not need to be specially modified, and the design is simple. The present application is applicable to scenarios where beam switching is caused by a movement of a terminal, such as an on-board terminal, customer premise equipment (CPE) in a subway, and a mobile terminal in an indoor distributed system.

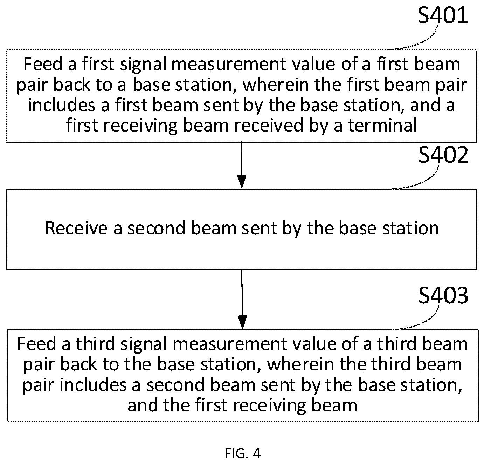

FIG. 4 shows a schematic flowchart of a method for transmitting data provided by an embodiment of the present application. The method may be performed by a terminal in communication with the aforementioned base station. In other words, the method may be performed by software or hardware installed on the terminal. As shown in FIG. 4, the method may include the following steps:
S401: a first signal measurement value of a first beam pair is fed back to the base station.

The first beam pair includes a first beam sent by the base station, and a first receiving beam received by the terminal. The first receiving beam is a receiving beam corresponding to the first beam.

S402: a second beam sent by the base station is received.

S403: a third signal measurement value of a third beam pair is fed back to the base station.

The third beam pair includes the second beam sent by the base station, and the receiving beam received by the terminal and corresponding to the first beam.

An execution subject of the present embodiment is the terminal in communication with the aforementioned base station, and relevant performing steps may refer to the descriptions of the corresponding steps in the aforementioned embodiments, which will not be repeated to avoid repetition.

In one implementation, after feeding the third signal measurement value of the third beam pair back to the base station, the method further includes: receiving a beam switching indicator sent by the base station, wherein the beam switching indicator is used to instruct the terminal to perform a channel measurement based on a second receiving beam corresponding to the second beam; and feeding second channel information back to the base station, wherein the second channel information is obtained by measuring a channel via a second beam pair, and the second beam pair includes the second beam, and the receiving beam received by the terminal and corresponding to the second beam. That is, the base station and the terminal adopt a new beam pair (the second beam pair) for the channel measurement, and the terminal feeds back channel information.

In one implementation, before feeding the second channel information back to the base station, the method further includes: feeding first channel information back to the base station, wherein the first channel information is obtained by measuring a channel via a third beam pair. That is, the base station adopts a new sending beam for a channel measurement before sending a beam switching indicator to the terminal. The terminal still feeds back a channel quality and channel information for an original receiving beam (the third beam pair).

In one implementation, before receiving the second beam sent by the base station, the method further includes: feeding a second signal measurement value corresponding to a second reference signal associated with the second beam back to the base station, wherein the second beam is sent by the base station in a case where the second signal measurement value is greater than the first signal measurement value.

It needs to be noted that in the method for determining the transmission parameters or the method for transmitting the data provided by the embodiments of the present application, an execution subject may be an apparatus for determining the transmission parameters or an apparatus for transmitting the data, or a control module in the apparatus for determining the transmission parameters or the apparatus for transmitting the data that is configured to perform the method for determining the transmission parameters or the method for transmitting the data. In the embodiments of the present application, the apparatus for determining the transmission parameters or the apparatus for transmitting the data provided by the embodiments of the present application is illustrated by taking an example that the apparatus for determining the transmission parameters or the apparatus for transmitting the data performs the method for determining the transmission parameters or the method for transmitting the data.

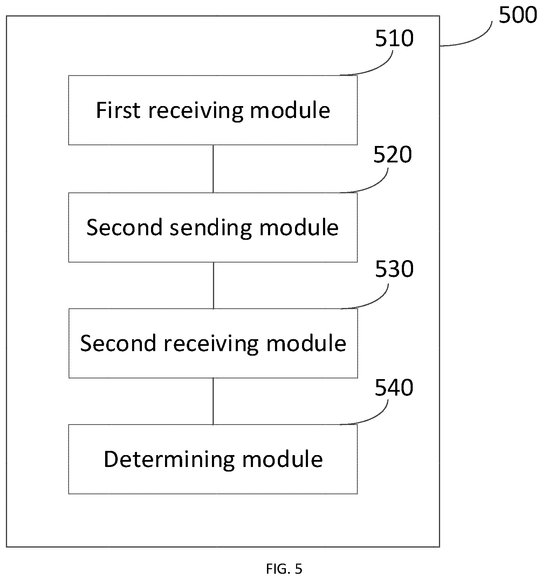

FIG. 5 shows a schematic structural diagram of an apparatus for determining transmission parameters provided by an embodiment of the present application. The apparatus 500 includes: a first receiving module 510, a second sending module 520, a second receiving module 530, and a determining module 540.

The first receiving module 510 is configured to receive a first signal measurement value of a first beam pair that is fed back by a terminal, wherein the first beam pair includes a first beam sent by a base station, and a first receiving beam received by the terminal, and the first receiving beam is a receiving beam corresponding to the first beam. The second sending module 520 is configured to send a second beam to the terminal. The second receiving module 530 is configured to receive a third signal measurement value of a third beam pair that is fed back by the terminal, wherein the third beam pair includes a second beam sent by the base station, and the first receiving beam. The determining module 540 is configured to determine transmission parameters of the base station according to the first signal measurement value and the third signal measurement value.

In one implementation, the determining module 540 is configured to determine the transmission parameters of the base station according to first channel information in a case where a difference between the third signal measurement value and the first signal measurement value is greater than a preset threshold value, wherein the first channel information is obtained by measuring a channel via the third beam pair; or determine the transmission parameters of the base station according to a preset value in a case where the difference between the third signal measurement value and the first signal measurement value is not greater than the preset threshold value.

In one implementation, the second sending module 520 is further configured to send a beam switching indicator to the terminal, wherein the beam switching indicator is used to instruct the terminal to perform a channel measurement based on a second receiving beam corresponding to the second beam. The second receiving module 530 is further configured to receive second channel information fed back by the terminal, wherein the second channel information is obtained by performing a channel measurement based on a second beam pair, and the second beam pair includes the second beam sent by the base station, and the second receiving beam received by the terminal. The determining module 540 is further configured to determine the transmission parameters of the base station according to the second channel information.

In one implementation, the second receiving module 530 is further configured to receive a second signal measurement value corresponding to a second reference signal associated with the second beam fed back by the terminal. The second sending module 520 is configured to send the second beam to the terminal in a case where the second signal measurement value is greater than the first signal measurement value.

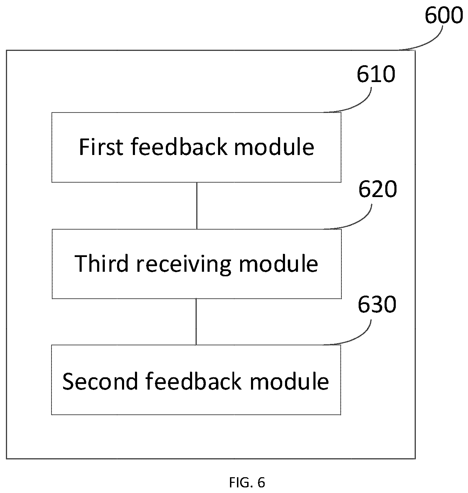

FIG. 6 shows a schematic structural diagram of an apparatus for transmitting data provided by an embodiment of the present application. The apparatus 600 includes: a first feedback module 610, a third receiving module 620, and a second feedback module 630.

The first feedback module 610 is configured to feed a first signal measurement value of a first beam pair back to a base station, wherein the first beam pair includes a first beam sent by the base station, and a first receiving beam received by a terminal, and the first receiving beam is a receiving beam corresponding to the first beam. The third receiving module 620 is configured to receive a second beam sent by the base station. The second feedback module 630 is configured to feed a third signal measurement value of a third beam pair back to the base station, wherein the third beam pair includes the second beam sent by the base station, and the first receiving beam.

In one implementation, the third receiving module 620 is further configured to receive a beam switching indicator sent by the base station, wherein the beam switching indicator is used to instruct the terminal to perform a channel measurement based on a second receiving beam corresponding to the second beam. The second feedback module 630 is further configured to feed second channel information back to the base station, wherein the second channel information is obtained by measuring a channel via a second beam pair, and the second beam pair includes the second beam, and the receiving beam received by the terminal and corresponding to the second beam.

In one implementation, the first feedback module 610 is further configured to feed first channel information back to the base station, wherein the first channel information is obtained by measuring a channel via a third beam pair.

In one implementation, the second feedback module 620 is further configured to feed a second signal measurement value corresponding to a second reference signal associated with the second beam back to the base station, wherein the second beam is sent by the base station in a case where the second signal measurement value is greater than the first signal measurement value.

The apparatus for determining the transmission parameters or the apparatus for transmitting the data provided by the embodiments of the present application can realize various processes implemented by the method for determining the transmission parameters or the method for transmitting the data described in at least one of the embodiments in FIGS. 1 to 4 and achieve the same technical effect, which will not be repeated herein to avoid repetition.

The apparatus for determining the transmission parameters or the apparatus for transmitting the data in the embodiments of the present application may be an apparatus, or may be a component, an integrated circuit, or a chip in a terminal device. The apparatus may be a mobile electronic device or a non-mobile electronic device. Exemplarily, the mobile electronic device may be a mobile phone, a tablet computer, a laptop computer, a handheld computer, an on-board electronic device, a wearable device, an ultra-mobile personal computer (UMPC), a netbook, or a personal digital assistant (PDA), etc. The non-mobile electronic device may be a server, network attached storage (NAS), a personal computer (PC), a television (TV), a teller machine, or self-service machine, etc., which is not specifically limited by the embodiments of the present application.

The apparatus for determining the transmission parameters or the apparatus for transmitting the data in the embodiments of the present application may be an apparatus with an operating system. The operating system may be an Android operating system, may be an ios operating system, and may also be other possible operating systems, which is not specifically limited by the embodiments of the present application.

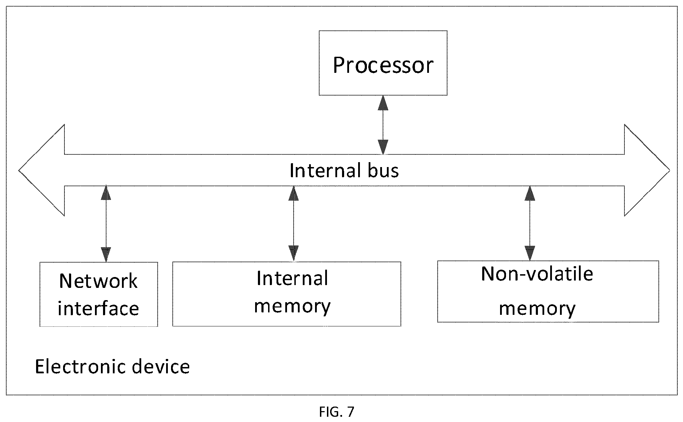

Optionally, FIG. 7 shows a schematic diagram of a hardware structure of an electronic device provided by an embodiment of the present application. Referring to the figure, at a hardware level, the electronic device includes a processor and optionally includes an internal bus, a network interface, and a memory. The memory may contain an internal memory, such as a high-speed random-access memory (RAM), or it may also include a non-volatile memory, such as at least one disk memory. Of course, the electronic device may further include other hardware needed for services.

The processor, the network interface and the memory may be connected to each other via an internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bi-directional arrow in this figure, but it does not indicate that there is only one bus or one type of bus.

The memory is configured to store a program. Specifically, the program may include a program code. The program code includes a computer operating instruction. The memory may include an internal memory and a non-volatile memory and provide an instruction and data to the processor.

The processor reads a corresponding computer program from the non-volatile memory into the internal memory and then runs the same, forming an apparatus for locating a target user at a logical level. The processor executes the program stored in the memory and is specifically configured to perform: receiving a first signal measurement value of a first beam pair that is fed back by a terminal, wherein the first beam pair includes a first beam sent by a base station, and a first receiving beam received by the terminal, and the first receiving beam is a receiving beam corresponding to the first beam; sending a second beam to the terminal; receiving a third signal measurement value of a third beam pair that is fed back by the terminal, wherein the third beam pair includes a second beam sent by the base station, and the first receiving beam; and determining transmission parameters of the base station according to the first signal measurement value and the third signal measurement value.

In one implementation, the processor is further configured to perform: sending a beam switching indicator to the terminal, wherein the beam switching indicator is used to instruct the terminal to perform a channel measurement based on a second receiving beam corresponding to the second beam; receiving second channel information fed back by the terminal, wherein the second channel information is obtained by performing a channel measurement based on a second beam pair, and the second beam pair includes the second beam sent by the base station, and the second receiving beam received by the terminal; and determining the transmission parameters of the base station according to the second channel information.

In one implementation, the processor is further configured to perform: determining the transmission parameters of the base station according to first channel information in a case where a difference between the third signal measurement value and the first signal measurement value is greater than a preset threshold value, wherein the first channel information is obtained by measuring a channel via the third beam pair; or determining the transmission parameters of the base station according to a preset value in a case where the difference between the third signal measurement value and the first signal measurement value is not greater than the preset threshold value.

In one implementation, the processor is further configured to perform: receiving a second signal measurement value corresponding to a second reference signal associated with the second beam fed back by the terminal; and sending the second beam to the terminal in a case where the second signal measurement value is greater than the first signal measurement value.

In one implementation, the processor is further configured to perform: feeding a first signal measurement value of a first beam pair back to a base station, wherein the first beam pair includes a first beam sent by the base station, and a first receiving beam received by the terminal, and the first receiving beam is a receiving beam corresponding to the first beam; receiving a second beam sent by the base station; and feeding a third signal measurement value of a third beam pair back to the base station, wherein the third beam pair includes the second beam sent by the base station, and the first receiving beam.

In one implementation, the processor is further configured to perform: receiving a beam switching indicator sent by the base station, wherein the beam switching indicator is used to instruct the terminal to perform a channel measurement based on a second receiving beam corresponding to the second beam; and feeding second channel information back to the base station, wherein the second channel information is obtained by measuring a channel via the second beam pair, and the second beam pair includes the second beam, and the receiving beam received by the terminal and corresponding to the second beam.

In one implementation, the processor is further configured to perform: feeding first channel information back to the base station, wherein the first channel information is obtained by measuring a channel via the third beam pair.

In one implementation, the processor is further configured to perform: feeding a second signal measurement value corresponding to a second reference signal associated with the second beam back to the base station, wherein the second beam is sent by the base station in a case where the second signal measurement value is greater than the first signal measurement value.

The method disclosed above as illustrated in the embodiments shown in the various flowcharts of the present application may be applied to the processor or implemented by the processor. The processor may be an integrated circuit chip that has a capability to process signals. During an implementation process, all the steps of the above method may be completed by an integrated logic circuit of hardware or instructions in the form of software in the processor. The above processor may be a general-purpose processor, including a central processing unit (CPU), a network processor (NP), etc., and may further be a digital signal processor (DSP), an application specific integrated circuit (ASIC), a field-programmable gate array (FPGA) or other programmable logic devices, a discrete gate or a transistor logic device, or a discrete hardware component. Various methods, steps, and logical block diagrams disclosed in the embodiments of the present application may be realized or performed. The general-purpose processor may be a microprocessor, or the processor may also be any conventional processor, etc. The steps of the method disclosed in conjunction with the embodiment of the present application may be directly embodied to be performed and completed by a hardware decoding processor, or may be performed and completed through a combination of hardware and software modules in the decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

The electronic device may also perform the various methods described in the preceding method embodiments and realize functions and beneficial effects of the various methods described in the preceding method embodiments, which will not be repeated herein.

Of course, in addition to the implementation of software, the electronic device of the present application does not exclude other implementations, such as a logic device or a combination of software and hardware, etc., which means that an execution subject of the following processing flow is not limited to the individual logic units, but may also be hardware or a logic device.

An embodiment of the present application further proposes a computer-readable storage medium, storing one or more programs. The one or more programs, when executed by an electronic device including a plurality of application programs, cause the electronic device to perform the following operations: the method for determining the transmission parameters or the method for transmitting the data as described in at least one of the embodiments shown in FIGS. 1 to 4.

The computer-readable storage medium includes a read-only memory (ROM for short), a random access memory (RAM for short), a magnetic disk or an optical disk, etc.

Further, an embodiment of the present application further provides a computer program product, including a computer program stored on a non-transient computer-readable storage medium. The computer program includes a program instruction. The program instruction, when executed by a computer, implements the following flow: the method for determining the transmission parameters or the method for transmitting the data as described in at least one of the embodiments shown in FIGS. 1 to 4.

In conclusion, the foregoing is only preferred embodiments of the present application and is not intended to limit the scope of protection of the present application. Any modifications, equivalent substitutions, improvements, etc. made within the spirit and principle of the present application shall be included in the scope of protection of the present application.

The system, apparatus, module, or unit clarified by the above embodiments may specifically be implemented by a computer chip or entity, or by a product having a certain function. A typical implementation device is a computer. Specifically, the computer may be, for example, a personal computer, a laptop computer, a cellular telephone, a camera phone, a smart phone, a personal digital assistant, a media player, a navigation device, an e-mail device, a gaming console, a tablet computer, a wearable device, or a combination of any of these devices.

Computer-readable media include permanent and non-permanent, removable and non-removable media, and may be used by any method or technology to implement information storage. Information may be computer-readable instructions, data structures, modules of a program, or other data. Examples of storage media for a computer include, but are not limited to, a phase-change random access memory (PRAM), a static random access memory (SRAM), a dynamic random access memory (DRAM), other types of random access memories (RAMs), a read only memory (ROM), an electrically erasable programmable read only memory (EEPROM), a flash memory or other memory technologies, a compact disc read only memory (CD-ROM), a digital versatile disc (DVD) or other optical storage, a magnetic cartridge tape, magnetic tape disk storage or other magnetic storage devices, or any other non-transfer media that may be used for storing information which may be accessed by a computing device. As defined herein, the computer-readable medium does not include transitory media, such as modulated data signals and carriers.

It also needs to be noted that terms "include," "contain," or any other variant thereof, are intended to cover non-exclusive inclusion, such that a process, method, commodity or device that includes a series of elements includes not only those elements but also other elements that are not explicitly listed or further includes elements that are inherent to such a process, method, commodity or device. Without further limitation, an element defined by a phrase "including a ..." does not exclude the existence of other identical elements in the process, method, commodity or device including the element.

The various embodiments in this specification are described in a progressive manner, and the same or similar parts between the various embodiments can be referred to each other. Each embodiment focuses on contents different from other embodiments. In particular, for the system embodiment, as it is basically similar to the method embodiment, the description is relatively simple. As for related parts, please refer to partial description in the method embodiment.

## Claims

1. A method for determining transmission parameters, comprising:
receiving a first signal measurement value of a first beam pair that is fed back by a terminal, wherein the first beam pair comprises a first beam sent by a base station, and a first receiving beam received by the terminal, and the first receiving beam is a receiving beam corresponding to the first beam;
sending a second beam to the terminal;
receiving a third signal measurement value of a third beam pair that is fed back by the terminal, wherein the third beam pair comprises a second beam sent by the base station, and the first receiving beam; and
determining transmission parameters of the base station according to the first signal measurement value and the third signal measurement value.

2. The method according to claim 1, after receiving the third signal measurement value of the third beam pair that is fed back by the terminal, further comprising:
sending a beam switching indicator to the terminal, wherein the beam switching indicator is used to instruct the terminal to perform a channel measurement based on a second receiving beam corresponding to the second beam;
receiving second channel information fed back by the terminal, wherein the second channel information is obtained by performing a channel measurement based on a second beam pair, and the second beam pair comprises the second beam sent by the base station, and the second receiving beam received by the terminal; and
determining the transmission parameters of the base station according to the second channel information.

3. The method according to claim 1, wherein determining the transmission parameters of the base station according to the first signal measurement value and the third signal measurement value comprises:
Determining the transmission parameters of the base station according to first channel information in a case where a difference between the third signal measurement value and the first signal measurement value is greater than a preset threshold value, wherein the first channel information is obtained by measuring a channel via the third beam pair; or
determining the transmission parameters of the base station according to a preset value in a case where the difference between the third signal measurement value and the first signal measurement value is not greater than the preset threshold value.

4. The method according to claim 1, wherein sending the second beam to the terminal comprises:
receiving a second signal measurement value corresponding to a second reference signal associated with the second beam fed back by the terminal; and
sending the second beam to the terminal in a case where the second signal measurement value is greater than the first signal measurement value.

5. A method for transmitting data, comprising:
Feeding a first signal measurement value of a first beam pair back to a base station, wherein the first beam pair comprises a first beam sent by the base station, and a first receiving beam received by a terminal, and the first receiving beam is a receiving beam corresponding to the first beam;
receiving a second beam sent by the base station; and
feeding a third signal measurement value of a third beam pair back to the base station, wherein the third beam pair comprises a second beam sent by the base station, and the first receiving beam.

6. The method according to claim 5, after feeding the third signal measurement value of the third beam pair back to the base station, further comprising:
receiving a beam switching indicator sent by the base station, wherein the beam switching indicator is used to instruct the terminal to perform a channel measurement based on a second receiving beam corresponding to the second beam; and
feeding second channel information back to the base station, wherein the second channel information is obtained by measuring a channel via a second beam pair, and the second beam pair comprises the second beam, and the receiving beam received by the terminal and corresponding to the second beam.

7. The method according to claim 6, before feeding the second channel information back to the base station, further comprising:
feeding first channel information back to the base station, wherein the first channel information is obtained by measuring a channel via the third beam pair.

8. The method according to claim 5, before receiving the second beam sent by the base station, further comprising:
feeding a second signal measurement value corresponding to a second reference signal associated with the second beam back to the base station, wherein the second beam is sent by the base station in a case where the second signal measurement value is greater than the first signal measurement value.

9. An electronic device, comprising a processor, a memory, and a program or instruction stored on the memory and runnable on the processor, and the program or the instruction, when executed by the processor, implements the steps of the method for determining the transmission parameters according to any one of claims 1-4 or the method for transmitting the data according to any one of claims 5-8.

10. A readable storage medium, having a program or instruction stored thereon, wherein the program or the instruction, when executed by a processor, implements the steps of the method for determining the transmission parameters according to any one of claims 1-4 or the method for transmitting the data according to any one of claims 5-8.
